# EUROPEAN PATENT APPLICATION

(11) **EP 4 725 698 A1**
(43) Date of publication of application: **15.04.2026**
(21) Application number: 24858178.7
(22) Date of filing: 27.07.2024
(51) Int. Cl.: B33Y 40/00, B29C 64/35

(54) **WASTE REMOVAL APPARATUS FOR 3D PRINTER, AND 3D PRINTER**

(30) Priority: 30.08.2023 CN 202322363473 U; 13.10.2023 CN 202322762955 U
(71) Applicant: Shenzhen Tuozhu Technology Co., Ltd., Shenzhen, Guangdong 518000 (CN)
(72) Inventor: HUANG, Zekai, Shenzhen, Guangdong 518000 (CN); DONG, Xiaolong, Shenzhen, Guangdong 518000 (CN); XIONG, Xianwu, Shenzhen, Guangdong 518000 (CN); XIONG, Rongming, Shenzhen, Guangdong 518000 (CN); DONG, Qun, Shenzhen, Guangdong 518000 (CN); LIU, Yiming, Shenzhen, Guangdong 518000 (CN)
(74) Representative: Grünecker Patent- und Rechtsanwälte PartG mbB
(86) International application number: PCT/CN2024/108013
(87) International publication number: WO 2025/044635

(57) **Abstract**

The present application discloses a waste removal device for a 3D printer, and a 3D printer, the waste removal device being disposed in a 3D printer. The 3D printer is provided with a cavity enclosed by a housing, the housing being provided with a channel extending from the interior of the cavity to the exterior of the cavity; the waste removal device is disposed in the cavity, the waste removal device comprising a trigger member and a material receiving member; the trigger member is slidably connected to a main body of the waste removal device, and the material receiving member has a linking connection to the trigger member; when the trigger member is not being triggered, the material receiving member is located at an opening of the channel facing the interior of the cavity, and the surface area of the material receiving member is greater than or equal the surface area of the opening. Implementing the present application eliminates the need for manual operations by the user, achieves a high degree of automation, and achieves a high clearing efficiency, which can improve the working efficiency of a 3D printer.

## Description

The present application claims priority to Chinese Patent Application No. 202322363473.5, filed with the China National Intellectual Property Administration on August 30, 2023 and entitled "WASTE REMOVAL DEVICE FOR 3D PRINTER AND 3D PRINTER", and to Chinese Patent Application No. 202322762955.8, filed with the China National Intellectual Property Administration on October 13, 2023 and entitled "WASTE CLEANING DEVICE FOR 3D PRINTER AND 3D PRINTER", which are incorporated herein by reference in their entirety.

### TECHNICAL FIELD

The present application relates to the technical field of 3D printing, and in particular, to a waste removal device for a 3D printer and a 3D printer.

### BACKGROUND

A 3D printer (also known as a three-dimensional printer) is a type of process equipment for rapid prototyping. The 3D printing technology that can be currently used in a 3D printer is fused deposition modeling (FDM). FDM is a technology based on digital models for constructing three-dimensional objects by using materials such as powdered metal or plastic through layer-by-layer printing. In a specific implementation, in a 3D printer using the FDM technology, hot melt filamentous materials (also referred to as consumables) are provided to a nozzle by a feeding device, and the consumables are heated to a molten state in the nozzle. The nozzle can extrude the consumables in a molten state to a build plate while moving along a printing path of the 3D printer, and a three-dimensional object can be printed layer by layer.

When different consumables are used for printing, the nozzle needs to eject the previous consumable. That is, the nozzle needs to eject waste materials, and after the waste materials are ejected, another consumable is conveyed to the nozzle for heating. Alternatively, at the preparation stage of printing, the nozzle also needs to eject residual consumables from the last printing. Thus, how to remove the residual consumables ejected by the nozzle is an important issue worth paying attention to.

### SUMMARY

The present application provides a waste removal device for a 3D printer and a 3D printer, which do not need user intervention, and have a high degree of automation and a high removal efficiency.

In a first aspect, an embodiment of the present application provides a waste removal device for a 3D printer. The waste removal device is arranged in the 3D printer, and the 3D printer is provided with a cavity enclosed by a housing, where the housing is provided with a channel extending from an inside of the cavity to an outside of the cavity.

The waste removal device is arranged in the cavity, and the waste removal device includes a trigger member and a material receiving member.

The trigger member is slidably connected to a body of the waste removal device.

The material receiving member is connected to the trigger member in a linked manner, and when the trigger member is not triggered, the material receiving member is located at an opening of the channel facing the inside of the cavity. A surface area of the material receiving member is equal to or greater than a surface area of the opening.

With reference to the first aspect, in a first possible implementation, a surface area of the material receiving member is equal to or greater than a surface area of the opening. In the present application, the material receiving member shields the opening of the channel, so that the 3D printer is in a sealed state as a whole when the waste material is not discharged, thereby reducing the leakage of gas generated during printing, and also reducing the interference of gas outside the cavity of the 3D printer on the temperature in the cavity. This is beneficial to maintaining the temperature in the cavity, and the print quality is improved.

With reference to the first aspect or with reference to any one of the foregoing possible implementations of the first aspect, in a second possible implementation, an elastic member is further included. One side of the elastic member is connected to the trigger member or the material receiving member, and the other side of the elastic member is fixedly arranged. In the present application, the elastic member enables the trigger member or the material receiving member to automatically return to its original position after being triggered.

With reference to the first aspect or with reference to any one of the foregoing possible implementations of the first aspect, in a third possible implementation, a magnetic member is further included. The trigger member includes metal. The magnetic member is arranged on a printing head of the 3D printer or a housing of the 3D printer. In the present application, the magnetic member cooperates with the metal on the trigger member, so that the trigger member can automatically return to its original position after being triggered.

With reference to the first aspect or with reference to any one of the foregoing possible implementations of the first aspect, in a fourth possible implementation, a stroke amplification mechanism is further included. The trigger member is connected to the material receiving member via the stroke amplification mechanism. In the present application, the use of the stroke amplification mechanism allows the trigger member to move in a small range while the material receiving member can move in a large range.

With reference to the first aspect or with reference to any one of the foregoing possible implementations of the first aspect, in a fifth possible implementation, the waste removal device further includes an elastic member. One side of the elastic member is connected to the stroke amplification mechanism, and the other side of the elastic member is fixedly arranged. In the present application, the elastic member enables the stroke amplification mechanism to return to its original position when a trigger event disappears.

With reference to the first aspect or with reference to any one of the foregoing possible implementations of the first aspect, in a sixth possible implementation, the stroke amplification mechanism includes a transmission rod. A first end of the transmission rod is rotatably connected to the body of the waste removal device, a second end of the transmission rod is connected to the material receiving member, and the trigger member is connected between the first end and the second end of the transmission rod. In the present application, the use of the transmission rod allows the trigger member to move in a small range while the material receiving member can move in a large range.

With reference to the first aspect or with reference to any one of the foregoing possible implementations of the first aspect, in a seventh possible implementation, the stroke amplification mechanism includes two gears with different diameters. The trigger member is connected to a small-diameter gear, and the material receiving member is connected to a large-diameter gear. In the present application, a gear meshed manner is adopted for transmission, which can save space. The space utilization is high.

With reference to the first aspect or with reference to any one of the foregoing possible implementations of the first aspect, in an eighth possible implementation, the waste removal device further includes a first wiping member and a mounting base. The mounting base is fixedly arranged on the body of the waste removal device, and the first wiping member is arranged on a side of the mounting base facing the printing head. In the present application, the first wiping member can be mounted and fixed by the mounting base, and the nozzle of the printing head can be cleaned by the first wiping member.

With reference to the first aspect or with reference to any one of the foregoing possible implementations of the first aspect, in a ninth possible implementation, the first wiping member includes a metal cylinder, and a diameter of the first wiping member is greater than or equal to 1 mm and less than 4 mm. In the present application, by setting the diameter of the first wiping member to be in a range of 1 mm to 4 mm, the shear force of the first wiping member is improved, so that the first wiping member can better complete the material scraping operation.

With reference to the first aspect or with reference to any one of the foregoing possible implementations of the first aspect, in a tenth possible implementation, a second wiping member is further included. The second wiping member is rotatably connected to the body of the waste removal device, and a surface of the second wiping member is provided with a plurality of protrusions. In the present application, by providing a plurality of protrusions on the surface of the second wiping member, when the nozzle moves back and forth, the nozzle can contact the plurality of protrusions of the second wiping member, so as to clean the side surface of the nozzle.

With reference to the first aspect or with reference to any one of the foregoing possible implementations of the first aspect, in an eleventh possible implementation, the second wiping member includes a silicone wiping member. In the present application, the silicone wiping member is equivalent to a silicone soft brush, which can improve the effect of cleaning the nozzle and avoid damage to the nozzle.

With reference to the first aspect or with reference to any one of the foregoing possible implementations of the first aspect, in a twelfth possible implementation, the waste removal device further includes a silicone wiping member. The silicone wiping member is fixedly arranged on the body of the waste removal device. The first wiping member, the silicone wiping member, and the opening are located on a same side of the body of the waste removal device, and the first wiping member is located between the silicone wiping member and the opening. In the present application, by arranging both the first wiping member and the silicone wiping member, the nozzle can contact the first wiping member and the silicone wiping member in sequence, and cleaning can be performed multiple times, so as to improve the effect of cleaning the nozzle.

With reference to the first aspect or with reference to any one of the foregoing possible implementations of the first aspect, in a thirteenth possible implementation, a surface area of the opening is greater than a cross-sectional area of a waste material generated by the 3D printer. In the present application, by setting the opening of the channel facing the inside of the cavity to be greater than the cross-sectional area of the waste material, the waste material can be more easily discharged out of the 3D printer via the channel.

With reference to the first aspect or with reference to any one of the foregoing possible implementations of the first aspect, in a fourteenth possible implementation, the waste removal device further includes an upper cover provided with a blocking portion in a movement direction of the material receiving member to expose the opening. A plane on which the material receiving member is located is lower than a lowest point of the blocking portion. In the present application, the waste material ejected by the nozzle can be blocked by the upper cover during the movement of the material receiving member, and fall into the channel via the exposed opening to be discharged out of the 3D printer.

With reference to the first aspect or with reference to any one of the foregoing possible implementations of the first aspect, in a fifteenth possible implementation, the 3D printer is provided with a nozzle, and the body of the material receiving member is provided with a groove corresponding to the nozzle. In the present application, the groove receives the waste materials ejected by the nozzle, so that the waste materials ejected by the nozzle are easier to agglomerate, which facilitates the discharge of the waste materials out of the 3D printer.

In a second aspect, an embodiment of the present application provides a waste removal device for a 3D printer. The waste removal device includes a trigger member, a material drive member, and a material receiving member.

The trigger member is slidably or rotatably connected to a body of the waste removal device.

The trigger member is connected to the material drive member in a linked manner.

The material receiving member is fixedly arranged on the body of the waste removal device, and the material drive member is located on a side of the material receiving member facing a printing head. With reference to the second aspect, in a first possible implementation, the material drive member and the material receiving member are plate-shaped, and a plane on which the material drive member is located and a plane on which the material receiving member is located form an included angle greater than 0° and less than 180°. In the present application, by setting a certain angle between the material drive member and the material receiving member, the material drive member can push off the waste material on the material receiving member.

With reference to the second aspect or with reference to any one of the foregoing possible implementations of the second aspect, in a second possible implementation, a distance between a side of the material drive member close to the material receiving member and the material receiving member is greater than 0.5 mm but less than 1 cm, and a side of the material drive member away from the material receiving member is lower than a height of the printing head. In the present application, by arranging the distance between the side of the material receiving member close to the material drive member and the material receiving member to be greater than 0.5 mm but less than 1 cm, the interference between the material drive member and the material receiving member during the movement of the material drive member above the material receiving member can be avoided, and the side of the material drive member close to the material receiving member can be relatively close to the material receiving member, so that more waste materials can be pushed away with a relatively small force. At the same time, the side of the material drive member away from the material receiving member is lower than the height of the printing head, which ensures that the material drive member does not scrape the nozzle body.

With reference to the second aspect or with reference to any one of the foregoing possible implementations of the second aspect, in a third possible implementation, an elastic member is further included. One side of the elastic member is connected to the trigger member or the material drive member, and the other side of the elastic member is fixedly arranged. In the present application, the elastic member enables the trigger member or the material receiving member to automatically return to its original position after being triggered.

With reference to the second aspect or with reference to any one of the foregoing possible implementations of the second aspect, in a fourth possible implementation, a magnetic member is further included. The trigger member includes metal. The magnetic member is arranged on the printing head of the 3D printer or a housing of the 3D printer. In the present application, the magnetic member cooperates with the metal on the trigger member, so that the trigger member can automatically return to its original position after being triggered.

With reference to the second aspect or with reference to any one of the foregoing possible implementations of the second aspect, in a fifth possible implementation, the trigger member is rod-shaped, and the trigger member has a first end and a second end. A first portion of the trigger member is rotatably connected to the body of the waste removal device, and the first portion is a portion of the trigger member located between the first end and the second end. The first end of the trigger member is triggered by the 3D printer. In the present application, by configuring the trigger member to be rod-shaped, the material drive member can be pulled based on the lever principle, which reduces the difficulty in triggering.

With reference to the second aspect or with reference to any one of the foregoing possible implementations of the second aspect, in a sixth possible implementation, the second end of the trigger member is connected to the material drive member. A distance between the first end and the first portion is a first length, a distance between the second end and the first portion is a second length, and the first length is less than the second length.

With reference to the second aspect or with reference to any one of the foregoing possible implementations of the second aspect, in a seventh possible implementation, the waste removal device further includes a connecting member and an elastic member. The connecting member connects the second end of the trigger member to the material drive member. One side of the elastic member is connected to the connecting member, and the other side of the elastic member is fixedly arranged. In the present application, by connecting the trigger member to the material drive member via the connecting member, the trigger member can control the material drive member via the connecting member. In addition, the assembly composed of the trigger member, the connecting member, and the material drive member can be returned to its original position via the elastic member after a trigger event is eliminated.

With reference to the second aspect or with reference to any one of the foregoing possible implementations of the second aspect, in an eighth possible implementation, two gears with different diameters are further included. The trigger member is connected to a small-diameter gear, and the material receiving member is connected to a large-diameter gear. In the present application, a gear meshed manner is adopted for transmission, which can reduce space. The space utilization is high. With reference to the second aspect or with reference to any one of the foregoing possible implementations of the second aspect, in a ninth possible implementation, a second wiping member is further included. The second wiping member is rotatably connected to the body of the waste removal device. A surface of the second wiping member is provided with a plurality of protrusions. In the present application, a plurality of protrusions are provided on the second wiping member, so that when the nozzle moves back and forth, the nozzle can contact the plurality of protrusions of the second wiping member, so as to clean the side surface of the nozzle.

With reference to the second aspect or with reference to any one of the foregoing possible implementations of the second aspect, in a tenth possible implementation, the second wiping member further includes a silicone wiping member. In the present application, the silicone wiping member is equivalent to a silicone soft brush, which can improve the effect of cleaning the nozzle and avoid damage to the nozzle.

With reference to the second aspect or with reference to any one of the foregoing possible implementations of the second aspect, in an eleventh possible implementation, the printing head is provided with a nozzle, and a body of the material receiving member is provided with a groove corresponding to the nozzle. In the present application, the groove receives the waste materials ejected by the nozzle, so that the waste materials ejected by the nozzle are easier to agglomerate, which facilitates the discharge of the waste materials out of the 3D printer.

In a third aspect, an embodiment of the present application provides a waste removal device for a 3D printer. The waste removal device includes a trigger member, a transmission member, an elastic member, a material drive plate, and a material receiving plate.

One end of the trigger member is connected to one end of the transmission member, and the other end of the trigger member is configured to contact a printing head of the 3D printer.

The other end of the transmission member is connected to one end of the material drive member. The other end of the material drive member is connected to one end of the elastic member, and the other end of the elastic member is connected to a housing of the waste removal device.

A portion of the material drive member that is located outside the housing of the waste removal device is on a side of the material receiving member facing the printing head. The material receiving member is fixedly connected to the housing of the waste removal device, and the material receiving plate is configured to receive the waste material of the 3D printer. The waste removal device according to the embodiments of the present application can prevent the waste material from falling onto the build plate when the printing head discharges the waste material, and can automatically remove the waste material remaining on the material receiving plate, thereby improving the working efficiency of the 3D printer.

With reference to the third aspect, in a first possible implementation, the trigger member includes a trigger rack, and the transmission member includes a gear.

One end of the trigger rack connected to the gear is provided with sawteeth, and the sawteeth of the trigger rack are meshed with the gear for transmission. In the present application, a meshed manner is adopted for transmission, which can reduce space. The space utilization is high.

With reference to the third aspect or with reference to any one of the foregoing possible implementations of the first aspect, in a second possible implementation, the trigger rack is provided with a first groove, the housing of the waste removal device is provided with a first track corresponding to the first groove, and the first groove is slidably connected to the first track.

In the present application, the trigger rack can move in the housing without increasing costs. The cost is low.

With reference to the third aspect or with reference to any one of the foregoing possible implementations of the first aspect, in a third possible implementation, the trigger member further includes a protrusion, and the protrusion of the trigger member is arranged in a first guide slot of the waste removal device in a protruding manner.

With reference to the third aspect or with reference to any one of the foregoing possible implementations of the third aspect, in a fourth possible implementation, the material drive member includes a material drive rack, and the transmission member includes a gear.

One end of the material drive rack connected to the gear is provided with sawteeth, and the sawteeth of the material drive rack are meshed with the gear for transmission.

In the present application, a meshed manner is adopted for transmission, which can reduce space. The space utilization is high. In the present application, a meshed manner is adopted for transmission, which can reduce space. The space utilization is high.

With reference to the third aspect or with reference to any one of the foregoing possible implementations of the third aspect, in a fifth possible implementation, the material drive rack is provided with a second groove, and a fixing post is arranged at one end of the second groove. The second groove accommodates the elastic member, and one end of the elastic member is connected to the fixing post.

With reference to the third aspect or with reference to any one of the foregoing possible implementations of the third aspect, in a sixth possible implementation, the material drive rack is provided with a third groove, and the housing of the waste removal device is provided with a second track corresponding to the third groove.

The third groove is slidably connected to the second track.

In the present application, the material drive rack can move in the housing without increasing costs. The cost is low.

With reference to the third aspect or with reference to any one of the foregoing possible implementations of the third aspect, in a seventh possible implementation, the material drive member further includes a material drive plate.

A connecting block is arranged on the material drive rack. The connecting block is located in a second guide slot of the waste removal device, and the connecting block is connected to the material drive plate.

By driving the material drive plate in the above manner, the entire transmission process can be performed by using a pure mechanical structure, which avoids the inclusion of a circuit structure in the waste removal device, and ensures the stability of the waste removal device while reducing the manufacturing costs.

With reference to the third aspect or with reference to any one of the foregoing possible implementations of the third aspect, in an eighth possible implementation, the housing of the waste removal device includes a hanging arm, and a plane on which the hanging arm is located and a plane on which the housing is located form a preset angle.

The hanging arm is fixedly connected to a profile provided with a guide rail in the 3D printer.

By implementing the embodiments of the present application, when the trigger member contacts the printing head, the printing head can drive the material drive plate to displace, thereby removing the waste material on the material receiving member. Further, the transmission member and the elastic member are accommodated inside the housing, so that the transmission member and the elastic member can be effectively protected, thereby further improving the stability of the waste removal device.

With reference to the third aspect or with reference to any one of the foregoing possible implementations of the third aspect, in a ninth possible implementation, the material receiving plate is fixedly connected to a side surface of the housing close to the second guide slot.

With reference to the third aspect or with reference to any one of the foregoing possible implementations of the third aspect, in a tenth possible implementation, the 3D printer includes a printing head and a motor, and the printing head is provided with a nozzle.

When the printing head moves, under the drive of the motor, to contact the trigger member, the material drive plate is located on a side of the nozzle away from the motor.

In this way, the first position is on a side away from the motor, and the second position is on a side close to the motor, so that when the material drive plate returns from the second position to the first position and sweeps off the waste material, the falling position of the waste material can be away from the build plate.

In a fourth aspect, an embodiment of the present application provides a 3D printer. The 3D printer includes a printing head and the waste removal device described with reference to the first aspect or with reference to any one of the foregoing possible implementations of the first aspect.

It can be seen that, in the present application, the waste removal device is arranged in a 3D printer, the 3D printer is provided with a cavity enclosed by a housing, and the housing is provided with a channel extending from the inside of the cavity to the outside of the cavity. The waste removal device is arranged in the cavity, and the waste removal device includes a trigger member and a material receiving member. The trigger member is slidably connected to the body of the waste removal device. The material receiving member is connected to the trigger member in a linked manner, and when the trigger member is not triggered, the material receiving member is located at an opening of the channel facing the inside of the cavity. The surface area of the material receiving member is equal to or greater than the surface area of the opening. By implementing the present application, user intervention is not needed. The degree of automation is high, and the removal efficiency is high, which can improve the working efficiency of the 3D printer.

It should be understood that for implementation and beneficial effects of the foregoing aspects of the present application, reference may be made to each other.

### BRIEF DESCRIPTION OF THE DRAWINGS

FIG. 1 is a schematic diagram of an application scenario of a 3D printer according to an embodiment of the present application;
FIG. 2 is a first schematic diagram of the structure of a waste removal device according to an embodiment of the present application;
FIG. 3 is a second schematic diagram of the structure of a waste removal device according to an embodiment of the present application;
FIG. 4 is a third schematic diagram of the structure of a waste removal device according to an embodiment of the present application;
FIG. 5 is a fourth schematic diagram of the structure of a waste removal device according to an embodiment of the present application;
FIG. 6 is a fifth schematic diagram of the structure of a waste removal device according to an embodiment of the present application;
FIG. 7 is a sixth schematic diagram of the structure of a waste removal device according to an embodiment of the present application;
FIG. 8 is a schematic diagram of another application scenario of a 3D printer according to an embodiment of the present application;
FIG. 9 is a schematic diagram of the structure of a waste removal device according to an embodiment of the present application;
FIG. 10 is a schematic diagram of the internal structure of the waste removal device shown in FIG. 9;
FIG. 11 is another schematic diagram of the internal structure of the waste removal device shown in FIG. 9;
FIG. 12 is another schematic diagram of the structure of a waste removal device according to an embodiment of the present application; and
FIG. 13a to FIG. 13c are schematic diagrams of states of a waste removal device according to an embodiment of the present application.

### DETAILED DESCRIPTION

Implementations of the technical solutions of the present application are further described in detail below with reference to the accompanying drawings.

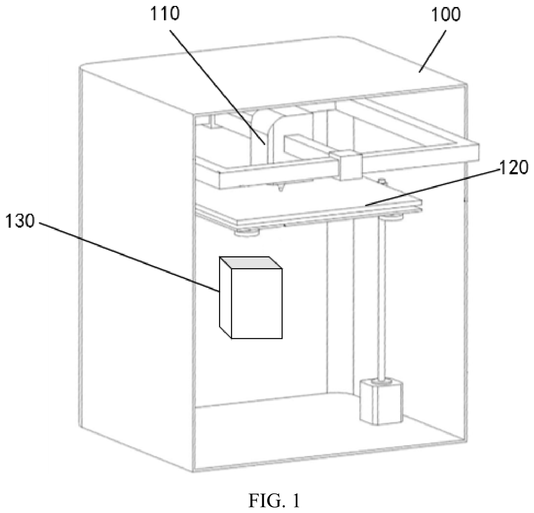

Referring to FIG. 1, FIG. 1 is a schematic diagram of an application scenario of a 3D printer according to an embodiment of the present application. As shown in FIG. 1, the 3D printer includes a housing 100 and a cavity formed by the housing 100 in an enclosing manner. The cavity is sealed, and for illustration, FIG. 1 does not show the whole housing enclosing the sealed cavity. A waste removal device 130 and a printing head 110 are arranged in the cavity. The housing 100 is provided with a channel extending from the inside of the cavity to the outside of the cavity. The channel is configured to discharge the waste material ejected by the nozzle out of the 3D printer.

The waste removal device 130 includes a trigger member and a material receiving member. The material receiving member is connected to the trigger member in a linked manner, and when the trigger member is not triggered, the material receiving member is arranged at and covers an opening of the channel facing the inside of the cavity. Optionally, the surface area of the material receiving member is equal to or greater than the surface area of the opening.

In the present application, the connection includes a detachable connection and a non-detachable connection. For example, the fixed connection may include a detachable fixed connection and a non-detachable fixed connection, the rotatable connection may include a detachable rotatable connection and a non-detachable rotatable connection, and the slidable connection may include a detachable slidable connection and a non-detachable slidable connection. Likewise, the connection may also be a direct connection or an indirect connection via a component.

Specifically, the printing head 110 moves in the cavity for heating the printing material and extruding the heated and melted printing material. When the waste material in the printing head 110 needs to be removed, for example, during a material changing process of changing from one printing material to another printing material, i.e., a multi-color printing, at the beginning of printing, or at the end of the printing, the printing head 110 moves above the material receiving member to eject the waste material; after the waste material is ejected, the printing head 110 moves to the trigger member to contact the trigger member. Alternatively, during the movement of the printing head 110 to the material receiving member, the trigger member may be triggered by the printing head. After the trigger member is triggered, the material receiving member can be pulled to expose the opening of the channel, thereby discharging the waste material from the channel out of the 3D printer.

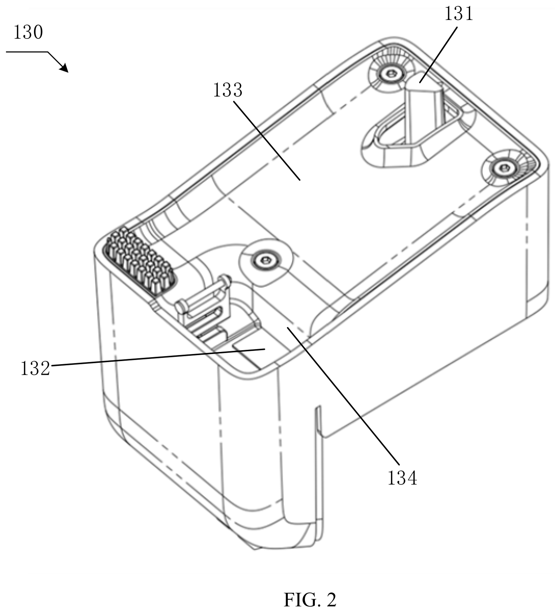

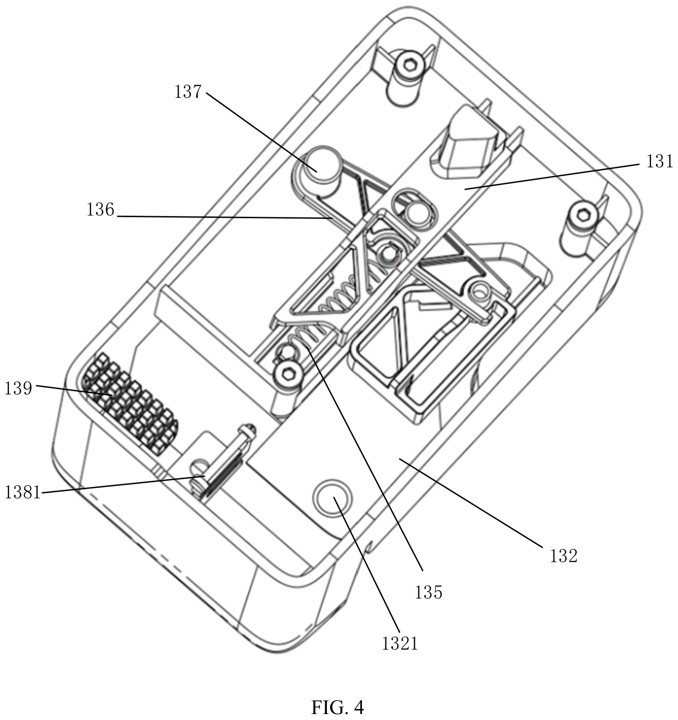

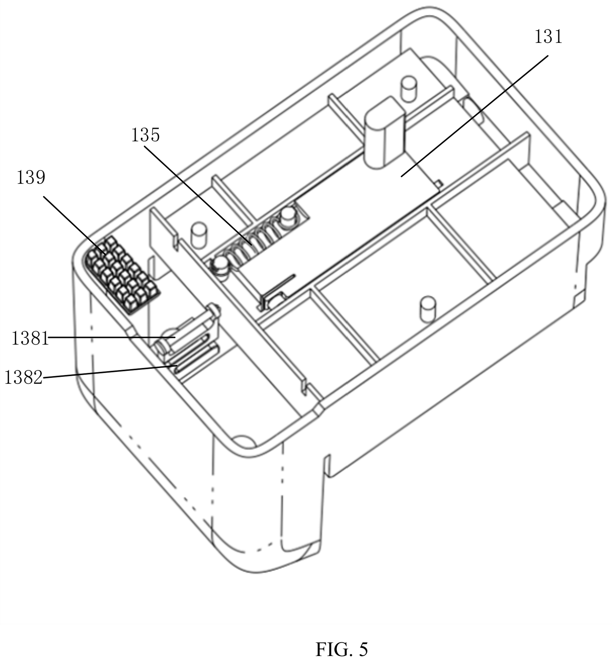

The structure of the waste removal device 130 will be described in detail below with reference to FIG. 2 to FIG. 5.

As shown in FIG. 2, the waste removal device 130 includes a trigger member 131 and a material receiving member 132. The trigger member 131 is slidably connected to the body of the waste removal device 130. The material receiving member 132 is connected to the trigger member 131 in a linked manner, and when the trigger member 131 is not triggered, the material receiving member 132 is located at an opening of the channel facing the inside of the cavity.

Optionally, the surface area of the material receiving member 132 is equal to or greater than the surface area of the opening. As shown in FIG. 2, the waste removal device is provided with an opening only below the material receiving member 132, and other positions of the waste removal device are sealed. In the case that the trigger member 131 does not move (i.e., the trigger member is not triggered), the surface area of the material receiving member 132 is greater than the surface area of the opening. That is, the material receiving member 132 can block the opening during the 3D printing process, and expose the opening when the waste material needs to be discharged from the 3D printer, so as to enable the waste material to fall into the channel via the opening and then be discharged from the 3D printer.

In a specific implementation, the 3D printer is provided with a nozzle, and the body of the material receiving member 132 is provided with a groove 1321 corresponding to the nozzle. That is, when the printing head moves above the material receiving member 132, the nozzle is located above the groove 1321, and in this case, the waste materials ejected by the nozzle are easier to agglomerate under the action of the groove 1321. The agglomeration means that the waste materials ejected by the nozzle gather into a mass instead of being individual filaments. After the waste materials ejected by the nozzle are agglomerated, the waste materials can be discharged out of the 3D printer by means of their gravity. Additionally, there is no filament moving freely in the cavity of the 3D printer to interfere with the forming of the printed object, and there is no filament hanging on the nozzle, which can ensure the print quality of the 3D printer. The printing head 110 can move in the cavity formed by the housing 100 of the 3D printer, and the printing material can be deposited in the 3D print table 120 via the nozzle. The trigger member 131 is arranged within a movement stroke range of the printing head 110. When the waste material in the nozzle of the printing head 110 needs to be removed, the printing head 110 moves above the groove 1321 of the material receiving member, and ejects the waste material of the nozzle into the groove 1321. After the waste material is ejected, or during the movement of the printing head, the printing head 110 contacts the trigger member 131 to apply a certain pressure to the trigger member 131, so that the trigger member 131 is triggered by the printing head 110, and thereby pulls the material receiving member 132 to move to expose the opening of the channel. As such, the ejected waste material in the groove 1321 can be discharged out of the 3D printer from the opening along the channel. Optionally, the trigger member 131 being triggered means that the trigger member 131 can drive the material receiving member 132 to move. The trigger member may be triggered by collision/contact with the printing head, or may be triggered in a noncontact manner, for example, by attraction/repulsion of a magnet on the printing head.

The surface area of the opening is greater than the cross-sectional area of the waste material generated by the 3D printer. Specifically, by setting the opening of the channel facing the inside of the cavity to be greater than the cross-sectional area of the waste material, the waste material can be more easily discharged out of the 3D printer via the channel.

In some feasible implementations, the waste removal device further includes an upper cover 133 provided with a blocking portion 134 in a movement direction of the material receiving member 132 to expose the opening. The plane on which the material receiving member 132 is located is lower than the lowest point of the blocking portion 134. During the movement of the material receiving member 132, since the blocking portion 134 is fixedly arranged on the movement path of the material receiving member 132, the waste material ejected by the nozzle can be blocked by the upper cover 133 during the movement of the material receiving member 132, and fall into the channel via the exposed opening to be discharged out of the 3D printer.

It can be seen that, in this embodiment, the channel of the 3D printer is shielded by the waste removal device 130, so that the interior of the 3D printer is in a sealed state when the waste material is not removed. When the waste material in the 3D printer is removed, the waste material is discharged by the waste removal device 130 through the opening of the channel, and then the sealed state is recovered, so that the 3D printer forms a closed cavity as a whole, thereby reducing the leakage of gas generated during printing, and also reducing the interference of gas outside the cavity of the 3D printer on the temperature in the cavity. This is beneficial to maintaining the temperature in the cavity, and the print quality is improved. By implementing the present application, the waste material removal has a high degree of automation and a high removal efficiency, which can improve the working efficiency of the 3D printer.

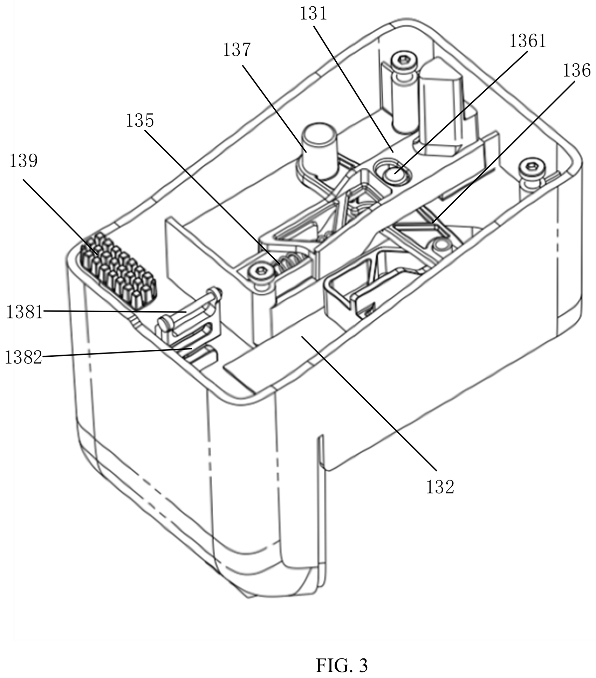

In some feasible implementations, referring to FIG. 3 to FIG. 5 together, the waste removal device 130 further includes an elastic member 135. One side of the elastic member 135 is connected to the trigger member or the material receiving member, and the other side of the elastic member 135 is fixedly arranged.

Exemplarily, the elastic member 135 may be a spring, rubber, or the like, which is not limited herein. In a specific implementation, the elastic member 135 may be fixedly arranged on the body of the waste removal device 130, or may be fixedly arranged on other components of the 3D printer, as long as the position restoration of the trigger member and/or the material receiving member can be realized. When the trigger member is triggered, the elastic member 135 deforms along with the movement of the trigger member or the material receiving member, such as being elongated/compressed. When the trigger event of the trigger member disappears, for example, when the printing head 110 is separated from the trigger member, the elastic member 135 rebounds and returns to its original position, and pulls the trigger member and the material receiving member to return to their original positions.

In some possible implementations, a magnetic member may be used to realize the position restoration of the trigger member and the material receiving member. The trigger member includes metal; that is, the trigger member itself may be made of metal, or a metal sheet is attached to the surface of the trigger member, or metal is provided inside the trigger member. The magnetic member is arranged in a direction opposite to the movement direction of the trigger member after the trigger member is triggered. For example, the magnetic member is arranged on a printing head of the 3D printer or a housing of the 3D printer. Specifically, when the trigger member is not triggered, it can be considered that the trigger member is in a natural state, and the trigger member is attracted/repulsed by the magnetic member; when the trigger member is triggered, the trigger member overcomes the attraction/repulsion of the magnetic member and moves, but is still within the magnetic force range of the magnetic member; when the trigger event of the trigger member disappears, for example, when the printing head 110 is separated from the trigger member, the trigger member is attracted/repulsed by the magnetic force of the magnetic member and returns to its natural state, and the trigger member pulls the material receiving member, so that the material receiving member returns to its original position.

It can be understood that the magnetic member may be any object that can generate a magnetic force, such as an iron-chromium-cobalt magnet, a rubidium magnet, or an electromagnet.

It can be seen that, in this example, the position restoration of the trigger member and the material receiving member is realized by the elastic member 135 or the magnetic member, so that after the waste material ejected by the nozzle falls into the channel via the opening, the opening can be sealed to form a closed cavity. User intervention is not needed. The degree of automation is high, and the removal efficiency is high, which can improve the working efficiency of the 3D printer.

In some possible implementations, the waste removal device further includes a stroke amplification mechanism, and the trigger member is connected to the material receiving member via the stroke amplification mechanism. The use of the stroke amplification mechanism allows the trigger member to move in a small range while the material receiving member can move in a large range. There are size requirements on the opening exposed after the material receiving member moves. The cross-sectional area of the opening needs to be greater than that of the waste material, so that the waste material can fall smoothly. Therefore, there are also size requirements on the movement range of the material receiving member. For example, if the movement path of the material receiving member needs to be greater than 2 cm, since the trigger member is linked with the material receiving member, the movement path of the trigger member is also required to be greater than 2 cm if there is no stroke amplification mechanism. However, the movement path of the trigger member in the cavity interferes with the movement of the printing head during the normal printing process, so it is necessary to reserve a clearance space for the trigger member, and in this case, the clearance space is relatively large, so that the size of the 3D printer is large. During the implementation of the present application, a stroke amplification mechanism is used. Assume that the ratio of the stroke magnification is 1:2-that is, the trigger member is connected to the middle of the transmission rod 136-if the movement path of the material receiving member is required to be greater than 2 cm, the movement path of the trigger member only needs to be 1 cm, so the size of the clearance space can be compressed, and thus the size of the 3D printer can be reduced. In addition, in the present application, the movement direction of the trigger member is the same as the movement direction of the material receiving member. That is, by using a stroke amplification mechanism allowing movement in the same direction, the size of the waste removal device in the movement direction of the trigger member and the material receiving member can be further reduced, so that the 3D printer is more compact.

Optionally, the stroke amplification mechanism includes a transmission rod 136. A first end of the transmission rod 136 is rotatably connected to the body of the waste removal device 130, a second end of the transmission rod 136 is connected to the material receiving member, and the trigger member is connected between the first end and the second end of the transmission rod 136. Specifically, the body of the waste removal device 130 is provided with a first rotating shaft 137, and the transmission rod 136 is provided with a first groove or a first through hole corresponding to the first rotating shaft 137. The transmission rod sleeves the first rotating shaft 137 via the first groove or the through hole, so that the transmission rod 136 can rotate around the first rotating shaft 137. Optionally, the first rotating shaft 137 may also be arranged on the transmission rod 136, and a first groove or a first through hole is provided on the body of the waste removal device 130, which can also achieve the same effect.

A protrusion 1361 is further provided between the first end and the second end of the transmission rod 136, and the trigger member is provided with a second groove or a second through hole cooperating with the protrusion 1361. The trigger member is connected to the protrusion 1361 of the transmission rod 136 via the second groove or the second through hole, so that the trigger member and the transmission rod 136 can move jointly; that is, the trigger member can pull the transmission rod 136 to rotate around the rotating shaft when being triggered. The movable range of the second groove or the second through hole is greater than the size of the protrusion 1361.

The second end of the transmission rod 136 may be connected to the material receiving member via a second rotating shaft. When the trigger member pulls the transmission rod 136 to move, the transmission rod 136 also pulls the material receiving member to move.

In some possible implementations, the body of the waste removal device 130 is provided with a first sliding rail, and the trigger member is provided with a first track that cooperates with the first sliding rail. The first sliding rail cooperates with the first track, so that the trigger member can slide on the first sliding rail. It can be understood that, besides the first sliding rail and the first track, the connection between the trigger member and the body of the waste removal device 130 may be realized in other forms, such as by a sleeve, which is not limited thereto solely.

Similarly, the waste removal device 130 may also be provided with a second sliding rail, and the material receiving member is provided with a second track. The second sliding rail cooperates with the second track, so that the material receiving member can slide along with the pulling of the transmission rod 136.

It can be understood that the positions of the first sliding rail and the first track can be interchanged, and the positions of the second sliding rail and the second track can also be interchanged. That is, the first track is arranged on the waste removal device 130, the first sliding rail is arranged on the trigger member, the second track is arranged on the waste removal device 130, and the second sliding rail is arranged on the material receiving member.

In some possible implementations, when the waste removal device is provided with the stroke amplification mechanism, one side of the elastic member may be connected to the stroke amplification mechanism, and the other side of the elastic member is fixedly arranged. Specifically, when the trigger member is triggered, the stroke amplification mechanism is pulled by the trigger member to rotate, so that the elastic member is elongated/compressed. When the trigger event disappears, for example, when the printing head 110 is separated from the trigger member, the elastic member rebounds and returns to its original position, and pulls the stroke amplification mechanism to return to its original position. At the same time, the material receiving member is also pulled by the stroke amplification mechanism to return to its original position.

In some possible implementations, the stroke amplification mechanism includes two gears with different diameters. The trigger member is connected to a small-diameter gear, and the material receiving member is connected to a large-diameter gear.

Exemplarily, the large-diameter gear and the small-diameter gear may be integrated stepped gears, or may be discrete gears obtained by assembly, which is not limited herein.

In a specific implementation, the trigger member may include a trigger rack. One end of the trigger rack connected to the small-diameter gear is provided with first sawteeth, and the trigger rack is in meshed connection with the small-diameter gear via the first sawteeth. In addition, the material receiving member may include a material receiving rack. One end of the material receiving rack connected to the large-diameter gear is provided with second sawteeth, and the material receiving rack is in meshed connection with the large-diameter gear via the second sawteeth. When the trigger member is triggered, the trigger member pulls the small-diameter gear to rotate via the trigger rack, so that the large-diameter gear rotates along with the small-diameter gear, and thereby the material receiving rack pulls the material receiving member to move in the same direction as the trigger member.

It can be seen that, in this embodiment, a meshed manner is adopted for transmission, which can save space. The space utilization is high.

In some possible implementations, referring to FIG. 3 to FIG. 5 together, the waste removal device further includes a first wiping member 1381 and a mounting base 1382. The mounting base 1382 is fixedly arranged on the body of the waste removal device 130, and the first wiping member 1381 is arranged on a side of the mounting base 1382 facing the printing head.

Exemplarily, the first wiping member is a metal cylinder, and the diameter range of the first wiping member 1381 is greater than or equal to 1 mm and less than 4 mm. Specifically, by configuring the first wiping member 1381 as a metal member, the heat resistance of the first wiping member 1381 can be improved, so that the first wiping member 1381 is not easy to soften in the sealed cavity, which ensures that the first wiping member 1381 can well complete the material scraping operation. In addition, by configuring the first wiping member 1381 as a cylinder, the first wiping member 1381 can be in good contact with the nozzle no matter which angle the first wiping member rotates to, which ensures that the first wiping member 1381 can well complete the material scraping operation. Further, since an excessively large diameter of the first wiping member 1381 causes the pressure angle during the material scraping process to be excessively small, the shear force is insufficient, resulting in the material scraping effect being insignificant and the material being easy to drag onto the hot bed. Therefore, by setting the diameter of the first wiping member 1381 to the range of 1 mm to 4 mm, the shear force of the first wiping member 1381 can be improved, so that the first wiping member 1381 can better complete the material scraping operation.

It can be understood that the mounting base 1382 can not only be fixed on the body of the waste removal device 130, but also on the 3D printer, so that the wiping structure can be fixed on the 3D printer. Here, the mounting base 1382 being configured to be fixed on the 3D printer should be understood in a broad sense. For example, it can be understood as: the mounting base 1382 may be fixed on the print table 120 of the 3D printer under the premise of meeting the condition that the wiping member can contact the nozzle of the 3D printer. Alternatively, the mounting base 1382 may be fixed on other components near the print table 120 of the 3D printer. That is, the fixing position of the mounting base 1382 is not limited. Preferably, the fixing position of the mounting base 1382 is reasonably arranged so that the wiping structure is located at a position where the body of the waste removal device 130 is closer to the material receiving member. In this way, when the printing of the 3D printer reaches the end of material ejecting, the printing head 110 can be controlled to move a relatively short distance to reach the wiping structure, so that the nozzle can be cleaned conveniently and quickly.

An exemplary working process of the wiping structure according to the embodiments of the present application is as follows: After the nozzle of the printing head 110 completes the material ejecting, and when a large number of excess materials remain on the nozzle and need to be cleaned, the printing head 110 is controlled to move to the vicinity of the wiping structure, and the printing head 110 is controlled to move back and forth in two opposite directions, so that the nozzle of the printing head 110 is repeatedly rubbed against the first wiping member 1381. As such, the first wiping member 1381 can wipe off the waste materials on the nozzle, thereby realizing the cleaning of the nozzle.

It can be seen that, in this embodiment, when the metal first wiping member 1381 is used to wipe the nozzle, the waste materials on the nozzle can be wiped off more easily, thereby improving the wiping efficiency. In addition, the metal member is heat-resistant and wear-resistant, and does not need to be frequently replaced, thereby improving the durability of the wiping structure and further facilitating the reduction of maintenance costs.

In some possible implementations, the waste removal device may include a second wiping member 139. The second wiping member is fixedly arranged on the body of the waste removal device 130, and the surface of the second wiping member 139 facing the printing head is provided with a plurality of protrusions. Since the nozzle is generally conical in shape, and the surface of the second wiping member 139 is provided with a plurality of protrusions, when the nozzle moves back and forth between the plurality of protrusions, the excess material on the side surface of the cone can be completely wiped off.

Optionally, the second wiping member includes a silicone wiping member. It can be understood that the second wiping member 139 may also include a wiping member made of other materials, such as a wool brush or a rubber wiping member, which is not limited herein.

In a specific implementation, the body of the waste removal device 130 is provided with a second wiping member 139 made of silicone. Since the second wiping member 139 is provided with a plurality of protrusions, the second wiping member is equivalent to a silicone soft brush. When the printing head 110 passes through the second wiping member 139 so that the nozzle contacts the second wiping member 139, the nozzle can be cleaned by the plurality of protrusions, so as to improve the effect of cleaning the nozzle.

It can be understood that the first wiping member 1381 and the second wiping member 139 may be both provided, or only one of them may be provided, which is not limited herein. Exemplarily, the first wiping member 1381 may mainly scrape the waste material on the conical tip portion of the nozzle, and the second wiping member 139 may mainly scrape the waste material on the conical side portion of the nozzle.

The situation where the first wiping member 1381 and the second wiping member 139 are both provided will be described below.

In some possible implementations, the waste removal device further includes a silicone wiping member. The silicone wiping member is fixedly arranged on the body of the waste removal device 130. The first wiping member 1381, the silicone wiping member, and the opening are located on the same side of the body of the waste removal device 130, and the first wiping member 1381 is located between the silicone wiping member and the opening.

In a specific implementation, both the first wiping member 1381 and the silicone wiping member are arranged on one side of the body of the waste removal device 130, and the opening of the channel is also provided on this side, so that when the nozzle completes the material ejecting, the nozzle can be wiped nearby, thereby improving the waste material removal efficiency. Further, by arranging the first wiping member 1381 to be located between the silicone wiping member and the opening, when the nozzle completes the material ejecting, the nozzle can contact the first wiping member 1381 and the silicone wiping member in sequence and be cleaned multiple times, so as to improve the effect of cleaning the nozzle.

The waste removal device described above with reference to FIG. 1 to FIG. 5 can be used for 3D printers of any structure type, and is particularly suitable for 3D printers with sealed cavities, such as 3D printers with a structure of CoreXY, CoreXZ, CoreYZ, CoreYX, CoreZY, CoreZX, etc.

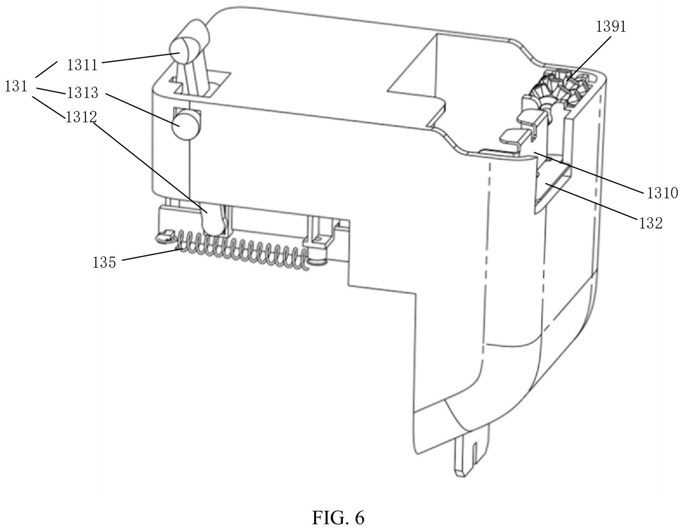

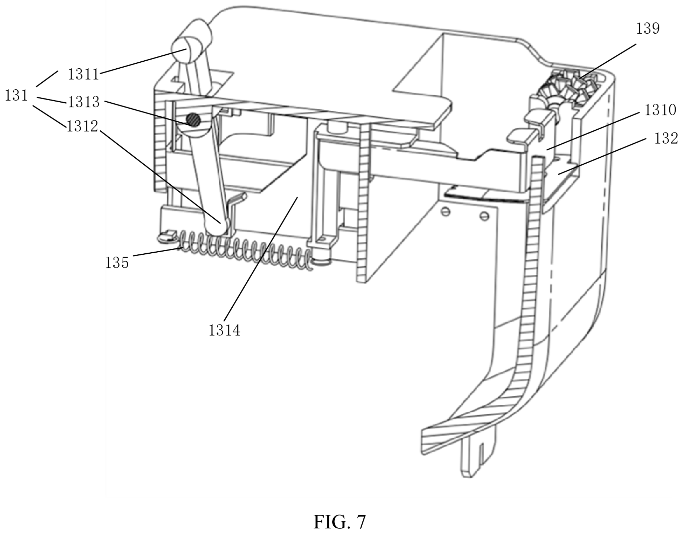

In some feasible implementations, referring to FIG. 6 and FIG. 7, the present application further provides a waste removal device 130 for a 3D printer. The waste removal device 130 includes a trigger member 131, a material drive member 1310, and a material receiving member 132. The trigger member 131 is slidably or rotatably connected to the body of the waste removal device 130. The trigger member 131 is connected to the material drive member 1310 in a linked manner. The material receiving member 132 is fixedly arranged on the body of the waste removal device 130, and the material drive member 1310 is located on a side of the material receiving member 132 facing the printing head.

In a specific implementation, the 3D printer is provided with a nozzle, and the body of the material receiving member 132 is provided with a groove 1321 corresponding to the nozzle. During the movement of the printing head, the printing material is deposited on the 3D print table via the nozzle. The trigger member 131 is arranged within the movement stroke range of the printing head. When the waste material in the nozzle of the printing head needs to be removed, the printing head moves above the groove 1321 of the material receiving member 132, and eject the waste material of the nozzle into the groove 1321. After the waste material is ejected, the printing head moves to the position of the trigger member 131 and contacts the trigger member 131 to apply a certain pressure to the trigger member 131, so that the trigger member 131 is triggered by the printing head, and thereby pulls the material drive member 1310 to discharge the waste material on the material receiving member 132 out of the 3D printer.

The material drive member 1310 and the material receiving member 132 are plate-shaped, and the plane on which the material drive member 1310 is located and the plane on which the material receiving member 132 is located form an included angle greater than 0° and less than 180°. In other words, the material drive member 1310 and the material receiving member 132 cannot be arranged in parallel. There needs to be a certain angle therebetween, so that the material drive member 1310 can push off the waste material on the material receiving member 132. Preferably, the included angle between the material drive member 1310 and the material receiving member 132 may be set to 90°, so that the material drive member 1310 and the material receiving member 132 can be perpendicular to each other, thereby enabling the material to be pushed off more effectively. Optionally, the distance between the side of the material drive member 1310 close to the material receiving member 132 and the material receiving member 132 is greater than 0.5 mm but less than 1 cm, and the material drive member 1310 is located above the material receiving member 132. If the distance between the side of the material drive member 1310 close to the material receiving member 132 and the material receiving member 132 is greater than 0.5 mm, the interference between the material drive member 1310 and the material receiving member 132 during the movement of the material drive member above the material receiving member 132 can be avoided. When the distance between the side of the material drive member 1310 close to the material receiving member 132 and the material receiving member 132 is less than 1 cm, the side of the material drive member 1310 close to the material receiving member 132 can be relatively close to the material receiving member 132, so that more waste materials can be pushed off with a relatively small force. In addition, the side of the material drive member 1310 away from the material receiving member 132 is lower than the height of the printing head, which ensures that the material drive member 1310 scrapes away the excess material at the nozzle tip during the position restoration process of the material drive member. In this case, the side of the material drive member 1310 close to the printing head is required to be lower than the height of the printing head, so as to ensure that the material drive member 1310 does not scrape the nozzle body. It can be seen that, in this embodiment, during the waste material removal process, the printing head controls the nozzle to automatically eject the material, and the printing head enables the trigger member 131 to perform waste material removal. User intervention is not needed. The degree of automation is high, and the removal efficiency is high, which can improve the working efficiency of the 3D printer.

In some possible implementations, still referring to FIG. 6 and FIG. 7, the waste removal device 130 further includes an elastic member 135. One side of the elastic member 135 is connected to the trigger member 131 or the material drive member 1310, and the other side of the elastic member 135 is fixedly arranged.

Exemplarily, the elastic member 135 may be a spring, rubber, or the like, which is not limited herein. In a specific implementation, the elastic member 135 may be fixedly arranged on the body of the waste removal device 130, or may be fixedly arranged on other components of the 3D printer, as long as the position restoration of the trigger member 131 and/or the material receiving member 132 can be realized. When the trigger member 131 is triggered, the elastic member 135 is elongated along with the movement of the trigger member 131 or the material receiving member 132. When the printing head is separated from the trigger member 131, the elastic member 135 rebounds and returns to its original position, and pulls the trigger member 131 and the material receiving member 132 to return to their original positions.

In some possible implementations, still referring to FIG. 6 and FIG. 7, the elastic member 135 may be replaced with a magnetic member to realize the position restoration of the trigger member 131 and the material receiving member 132. When the elastic member is replaced with the magnetic member, the trigger member 131 includes a metal part. The metal part may be integrally formed with the trigger member 131. Alternatively, the body of the trigger member 131 is the metal part. Alternatively, the metal part and the body of the trigger member 131 are provided separately, and the metal part is provided on the body of the trigger member 131. The magnetic member is arranged in a direction opposite to the movement of the trigger member 131 after being triggered. Specifically, when the trigger member 131 is not triggered, the metal part is engaged with the magnetic member; when the trigger member 131 is switched from a non-triggered state to a triggered state, the metal part is separated from the magnetic member along with the movement of the trigger member 131, but is still within the magnetic force range of the magnetic member; when the printing head is separated from the trigger member 131, the trigger member 131 loses pressure, and the metal part is subjected to the magnetic force of the magnetic member and drives the trigger member 131 to move toward the magnetic member, and finally the metal part is engaged with the magnetic member, so that the trigger member 131 returns to its original position, and the trigger member 131 pulls the material receiving member 132, thereby enabling the material receiving member 132 to return to its original position. It can be understood that the magnetic member may be any object that can generate a magnetic force, such as an iron-chromium-cobalt magnet, a rubidium magnet, or an electromagnet.

It can be seen that, in this example, the position restoration of the trigger member 131 and the material receiving member 132 is realized by the elastic member 135 or the magnetic member. User intervention is not needed. The degree of automation is high, and the removal efficiency is high, which can improve the working efficiency of the 3D printer.

In some possible implementations, still referring to FIG. 6 and FIG. 7, the trigger member 131 is rod-shaped, and the trigger member 131 has a first end 1311 and a second end 1312. A first portion 1313 of the trigger member 131 is rotatably connected to the body of the waste removal device 130. The first portion 1313 is a portion of the trigger member 131 located between the first end 1311 and the second end 1312. The first end 1311 of the trigger member 131 is triggered by the 3D printer.

In a specific implementation, a rotation mechanism is arranged on the waste removal device 130. The rotation mechanism may be a third through hole and a fourth through hole, or a third groove and a fourth groove. The first portion on the trigger member 131 may be a rotating shaft. Both ends of the rotating shaft extend from the body of the trigger member 131, and cooperate respectively with the third through hole and the fourth through hole, or cooperate respectively with the third groove and the fourth groove, so that the trigger member 131 can rotate in the third through hole and the fourth through hole, or in the third groove and the fourth groove.

Further, the first end 1311 of the trigger member 131 contacts with the 3D printer to apply a certain pressure to the trigger member 131, so that the trigger member 131 is triggered by the printing head. In some possible implementations, the waste removal device further includes a stroke amplification mechanism, and the trigger member 131 is connected to the material receiving member 132 via the stroke amplification mechanism.

Optionally, the second end 1312 of the trigger member 131 is connected to the material drive member 1310. The distance between the first end 1311 and the first portion 1313 is a first length, the distance between the second end 1312 and the first portion 1313 is a second length, and the first length is less than the second length.

Specifically, by taking the rotating shaft portion as a boundary, the first length is set to be less than the second length, so that the length from the first end 1311 triggered by the printing head to the first portion 1313 is less than the length from the second end 1312 to the first portion 1313. Since the trigger member 131 rotates around the rotating shaft portion, when the first length is less than the second length, the stroke of the connecting member connected to the second end 1312 can be amplified. The greater the length of the second length, the greater the degree of amplification of the stroke.

In some possible implementations, still referring to FIG. 6 and FIG. 7, the waste removal device further includes a connecting member, and the connecting member connects the second end 1312 of the trigger member 131 to the material drive member 1310. The waste removal device further includes an elastic member 135. One side of the elastic member 135 is connected to the connecting member, and the other side of the elastic member 135 is fixedly arranged.

In a specific implementation, when the trigger member 131 is triggered, the connecting member is pulled by the trigger member 131 to move, so that the elastic member 135 is elongated. When the printing head is separated from the trigger member 131, the elastic member 135 rebounds and returns to its original position, and pulls the connecting member to return to its original position. At the same time, the trigger member 131 and the material receiving member 132 are also pulled by the stroke amplification mechanism to return to their original positions.

In some possible implementations, still referring to FIG. 6 and FIG. 7, the stroke amplification mechanism includes a transmission member 1314. A first end 1311 of the transmission member 1314 is slidably connected to the body of the waste removal device 130, a second end 1312 of the transmission member 1314 is connected to the material drive member 1310, and the trigger member 131 is connected between the first end 1311 and the second end 1312 of the transmission member 1314. Specifically, when the first end 1311 of the trigger member 131 is triggered, due to the rotational motion of the trigger member 131, the second end 1312 of the trigger member 131 pushes the transmission member 1314 to slide on the body of the waste removal device 130, so as to push the material drive member 1310 to push off the waste material on the material receiving member 132.

In some possible implementations, the stroke amplification mechanism includes two gears with different diameters. The trigger member 131 is connected to a small-diameter gear, and the material receiving member 132 is connected to a large-diameter gear.

Exemplarily, the large-diameter gear and the small-diameter gear may be integrated stepped gears, or may be discrete gears obtained by assembly, which is not limited herein.

In a specific implementation, the trigger member 131 may include a trigger rack. One end of the trigger rack connected to the small-diameter gear is provided with first sawteeth, and the trigger rack is in meshed connection with the small-diameter gear via the first sawteeth. In addition, the material receiving member 132 may include a material receiving rack. One end of the material receiving rack connected to the large-diameter gear is provided with the second sawteeth, and the material receiving rack is in meshed connection with the large-diameter gear via the second sawteeth. When the trigger member 131 is triggered, the trigger member 131 pulls, via the trigger rack, the small-diameter gear to rotate, so that the large-diameter gear rotates along with the small-diameter gear, and thereby the material receiving rack pulls the material receiving member 132 to move in the same direction as the trigger member 131.

It can be seen that, in this embodiment, a meshed manner is adopted for transmission, which can save space. The space utilization is high.

In some possible implementations, still referring to FIG. 6 and FIG. 7, a silicone wiping member 1391 is further included. The silicone wiping member 1391 is rotatably connected to the body of the waste removal device 130.

The silicone wiping member 1391 is a cylindrical body having a plurality of protrusions on the surface thereof.

It can be understood that the silicone wiping member 1391 may also include a wiping member made of other materials, such as a wool brush or a rubber wiping member, which is not limited herein.

In a specific implementation, the body of the waste removal device 130 is provided with a silicone wiping member 1391. Since the silicone wiping member 1391 is provided with a plurality of protrusions, the silicone wiping member is equivalent to a silicone soft brush. When the printing head passes through the silicone wiping member 1391 so that the nozzle contacts the silicone wiping member 1391, the nozzle can be cleaned by the plurality of protrusions, so as to improve the effect of cleaning the nozzle.

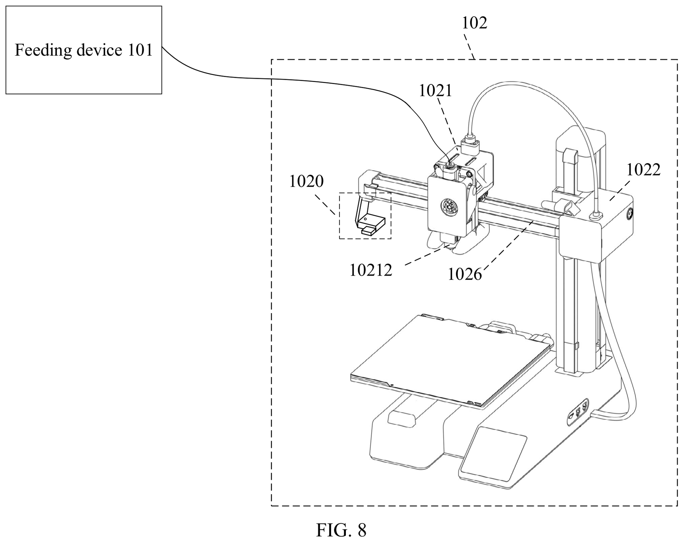

Referring to FIG. 8, FIG. 8 is a schematic diagram of another application scenario of a 3D printer according to an embodiment of the present application. As shown in FIG. 8, the 3D printer 102 is connected to a feeding device 101.

The feeding device 101 may hang a filament spool, and a consumable is wound around the filament spool. The feeding device 101 may provide the consumable to the 3D printer 102. Alternatively, the consumable may be rewound to the filament spool via the feeding device 101. That is, the feeding device 101 can feed or retract materials.

The 3D printer 102 includes a printing head 1021. The printing head 1021 includes a nozzle 10212. During the feeding process of the feeding device 101, the consumable is provided to the nozzle 10212. During the retracting process of the feeding device 101, the 3D printer 102 cuts off the consumable in the printing head 1021, and conveys the consumable to the feeding device 101.

The 3D printer 102 further includes a motor 1022, the printing head 1021 is slidably connected to a first guide rail 1026, and the motor 1022 can drive the printing head 1021 to move along the first guide rail 1026.

The 3D printer 102 further includes a waste removal device 1020, and the waste removal device 1020 is fixed on a side of the first guide rail 1026 away from the motor 1022. The printing head 1021 may move, under the drive of the motor 1022, to contact the waste removal device 1020, and then eject a residual consumable into the waste removal device 1020. The waste removal device 1020 can store and remove the residual consumable.

In the present application, the waste removal device is provided in the 3D printer. During the process of removing the residual consumable ejected by the nozzle, user intervention is not needed. The degree of automation is high, and the removal efficiency is high.

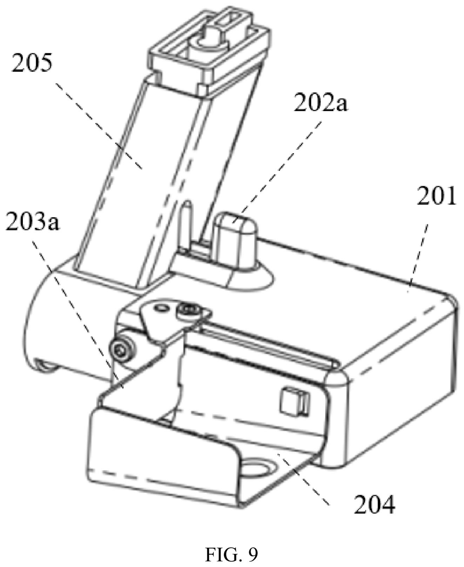

The structure of the waste removal device will be described in detail below with reference to FIG. 9 to FIG. 12.

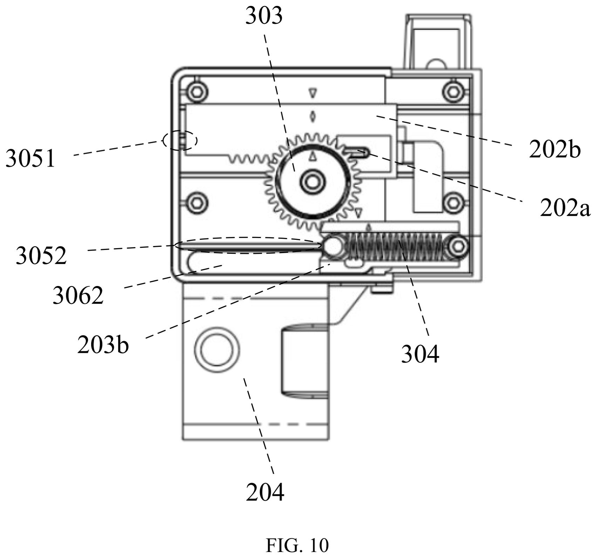

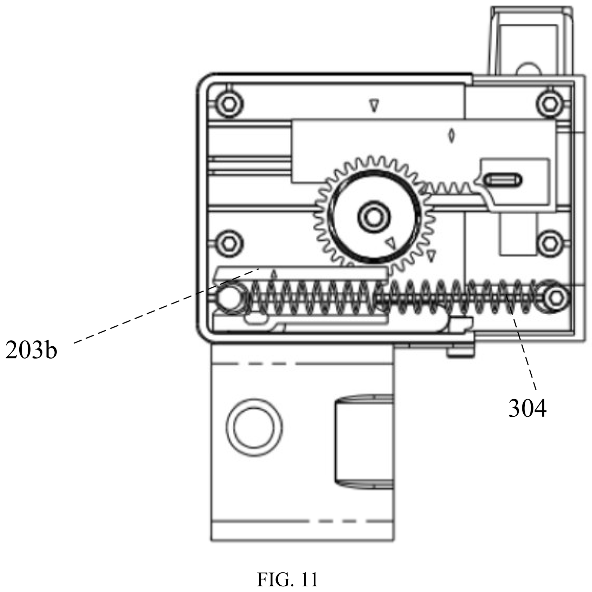

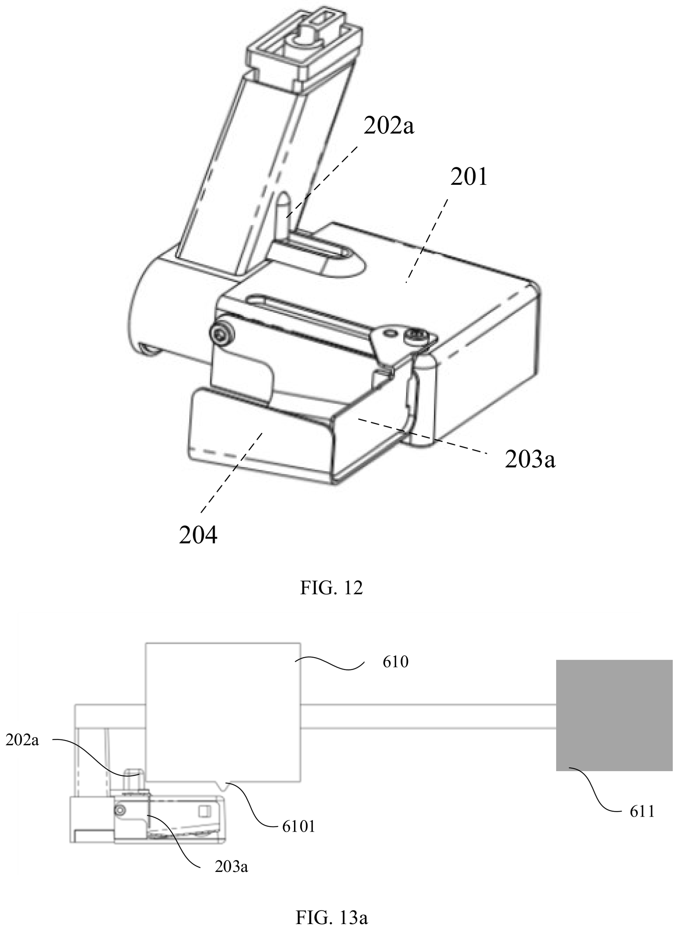

Referring to FIG. 9 to FIG. 11, FIG. 9 is a schematic diagram of the structure of a waste removal device according to an embodiment of the present application, FIG. 10 is a schematic diagram of the internal structure of the waste removal device shown in FIG. 9, FIG. 11 is another schematic diagram of the internal structure of the waste removal device shown in FIG. 9, and FIG. 12 is another schematic diagram of the structure of a waste removal device according to an embodiment of the present application.

The waste removal device includes a trigger member, a material receiving member 204, a material drive member, a transmission member 303, and an elastic member 304.

As shown in FIG. 10, one end of the transmission member 303 is connected to one end of the trigger member, and the other end of the trigger member is connected to the printing head of the 3D printer. Exemplarily, the transmission member 303 may be a gear, a timing belt, or the like.

In some feasible implementations, the trigger member includes a trigger rack 202b. Taking the transmission member 303 being specifically implemented as a gear as an example, one end of the trigger rack 202b connected to the gear is provided with sawteeth, and the sawteeth of the trigger rack 202b are meshed with the gear for transmission. In the present application, a meshed manner is adopted for transmission, which can reduce space. The space utilization is high.

Optionally, the trigger rack 202b is provided with a first groove, and a housing of the waste removal device is provided with a first track 3051 corresponding to the first groove. The first groove is slidably connected to the first track 3051. In this case, the trigger rack 202b may move along the first track 3051. Exemplarily, the first track 3051 and the housing of the waste removal device may be integrally formed, so that in the present application, the trigger rack can move in the housing without increasing costs. The cost is low.

Further, in some feasible implementations, the trigger member further includes a protrusion 202a. The protrusion 202a is the other end of the trigger member. Thus, the other end of the trigger member contacting the printing head is specifically that the protrusion 202a is used to contact the printing head. The protrusion 202a is arranged in a first guide slot of the waste removal device in a protruding manner; that is, the protrusion 202a may move in the first guide slot under the contact and push of the printing head. Optionally, the trigger rack 202b and the protrusion 202a may be integrally formed, so that when the protrusion 202a moves in the first guide slot of the waste removal device, the trigger rack 202b is driven to move along the first track 3051.

In some feasible implementations, the material drive member includes a material drive rack 203b. One end of the material drive rack 203b connected to the gear is provided with sawteeth, and the sawteeth of the material drive rack 203b are meshed with the gear for transmission. Exemplarily, the other end of the transmission member 303 is connected to one end of the material drive member. Specifically, the other end of the transmission member 303 is connected to one end of the material drive rack 203b. In the present application, a meshed manner is adopted for transmission, which can reduce space. The space utilization is high.

Optionally, the other end of the material drive member is connected to one end of the elastic member 304. Specifically, the other end of the material drive rack 203b is connected to one end of the elastic member 304. Exemplarily, the material drive rack 203b is provided with a second groove, and a fixing post is arranged in the second groove. The second groove accommodates the elastic member 304, and one end of the elastic member 304 is connected to the fixing post. In a specific implementation, the elastic member 304 may be a spring or a torsion spring. For example, when the material drive rack 203b moves toward the side where the fixing post is arranged, the elastic member 304 is in a stretched state shown in FIG. 11.

Optionally, in some feasible implementations, the material drive rack 203b is provided with a third groove, and the housing of the waste removal device is provided with a second track 3052 corresponding to the third groove. The third groove is slidably connected to the second track 3052.In this case, the material drive rack 203b may move along the second track 3052. Optionally, the material drive rack 203b and the second track 3052 may be integrally formed, so that in the present application, the material drive rack can move in the housing without increasing costs. The cost is low.

Further, in some feasible implementations, the material drive member further includes a material drive plate 203a. A connecting block is arranged on the material drive rack 203b. The connecting block is located in a second guide slot 3062 of the waste removal device, and the connecting block is connected to the material drive plate 203a. In this case, when moving along the second track 3052, the material drive rack 203b may drive the material drive plate 203a to move via the connecting block. Corresponding to the elastic member 304 being in a stretched state shown in FIG. 11, the position of the material drive plate 203a moves from the first position shown in FIG. 9 to the second position shown in FIG. 12.

Optionally, the material receiving member 204 is fixedly connected to a side surface of the housing 201 close to the second guide slot 3062. In this case, the material receiving member 204 is configured to receive the waste material ejected by the nozzle.

The other end of the elastic member 304 is connected to the housing 201 of the waste removal device. The transmission member 303 and the elastic member 304 may be arranged inside the housing 201. A portion of the material drive member that is located outside the housing 201 of the waste removal device, i.e., the material drive plate 203a, is on a side of the material receiving member 204 facing the printing head.

In the present application, when the printing head contacts the trigger member and continues to push the trigger member, the transmission member 303 rotates. In this case, the transmission member 303 may drive the material drive member to move, so that the material drive member moves from the first position to the second position. Exemplarily, the waste removal device may be arranged in a travelling direction of the printing head on the first guide rail, and the printing head moves along the first guide rail toward the waste removal device. After abutting against the protrusion 202a, the printing head continues to move and pushes the protrusion 202a to move in the first guide slot. In this case, the transmission member 303 rotates and may drive the material drive rack 203b in the material drive member to move in the second guide slot. Since the material drive plate 203a is connected to the material drive rack 203b, the material drive plate 203a may move from the first position shown in FIG. 9 to the second position shown in FIG. 12. In this case, the elastic member 304 is in a stretched state, and the nozzle starts to eject the waste material.

After the nozzle ejects the waste material, the ejected waste material falls onto the material receiving member 204. In this case, the printing head moves toward a side close to the motor along the first track, the printing head moves away from the protrusion 202a, and the elastic member 304 returns to a natural state. The elastic member drives the material drive rack 203b to move, and further drives the material drive plate 203a to return from the second position to the first position. The material drive plate 203a sweeps above the material receiving member 204 to sweep off the waste material of the 3D printer from the material receiving member 204. Exemplarily, when the printing head is separated from the trigger member, the transmission member 303 no longer applies a force to the material drive plate 203a, and the elastic member 304 drives the material drive plate 203a to return from the second position to the first position. During the position restoration process of the material drive plate 203a, the waste material on the material receiving member 204 can be swept off.

Of course, the above example is only an illustrative example, and those skilled in the art can drive the trigger member in any manner to drive the material drive plate, for example, by manual operation or by using other components of the 3D printer to abut against the trigger member, which is not limited in the embodiments of the present application.

The waste removal device according to the embodiments of the present application can prevent the waste material from falling onto the build plate when the printing head discharges the waste material, and can automatically remove the waste material remaining on the material receiving member 204, thereby improving the working efficiency of the 3D printer.

In some feasible implementations, the waste removal device further includes a hanging arm 205, and the plane on which the hanging arm 205 is located and the plane on which the housing 201 is located form a preset angle. The hanging arm 205 is fixedly connected to a profile provided with a guide rail in the 3D printer. Exemplarily, the hanging arm 205 and the housing 201 may be integrally formed.

Optionally, one end of the first guide rail of the 3D printer may be provided with a motor, and the hanging arm 205 is detachably connected to one end of the first guide rail away from the motor. By implementing the embodiments of the present application, when the trigger member contacts the printing head, the printing head can drive the material drive plate to displace, thereby removing the waste material on the material receiving member 204. Further, the transmission member and the elastic member are accommodated inside the housing, so that the transmission member and the elastic member can be effectively protected, thereby further improving the stability of the waste removal device.

Optionally, the material receiving member 204 may be detachably connected to a side surface of the housing 201 by fixing screws, thereby enabling the material receiving member 204 to be detachably connected to the waste removal device.

The states of the waste removal device according to an embodiment of the present application will be described below with reference to FIG. 13a to FIG. 13c.

Referring to FIG. 13a to FIG. 13c, FIG. 13a to FIG. 13c are schematic diagrams of states of a waste removal device according to an embodiment of the present application. As shown in FIG. 13a, when the printing head 610 moves along the first guide rail toward a side away from the motor 611, the printing head 610 gradually approaches the protrusion 202a. The body of the printing head 610 contacts the protrusion 202a, and the material drive plate 203a is in the first position.

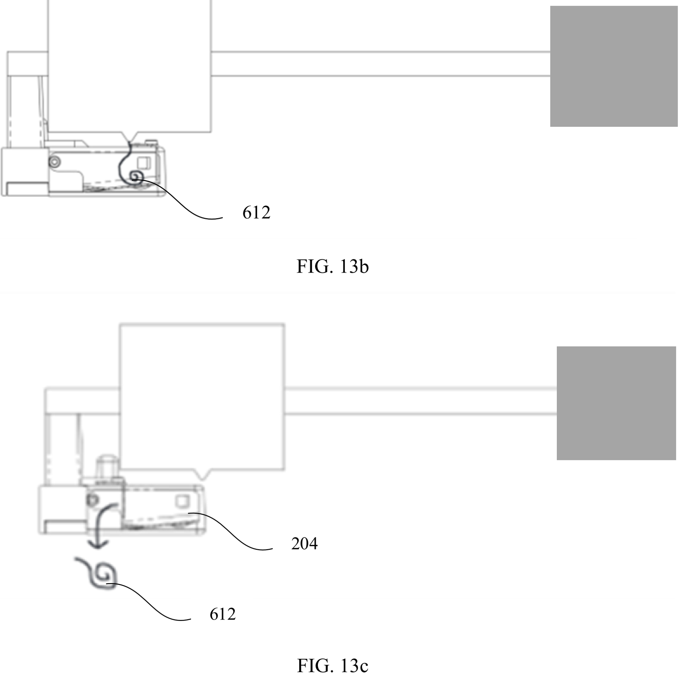

The printing head 610 continues to move along the first guide rail toward the side away from the motor 611, the printing head 610 pushes the protrusion 202a to move, and the material drive plate 203a is in the second position shown in FIG. 13b. In this case, the nozzle 6101 starts to eject the waste material 612, and the waste material 612 falls onto the material receiving member 204.

After the nozzle ejects the waste material, the printing head 610 moves along the first guide rail toward a side close to the motor 611, the printing head 610 is separated from the protrusion 202a, and the material drive plate 203a returns to the first position shown in FIG. 8 under the drive of the elastic member. In this case, the material drive plate 203a may sweep off the waste material 612 from the material receiving member 204, as shown in FIG. 13c.

In the present application, by equipping the 3D printer with the waste removal device, user intervention is not needed. The degree of automation is high, and the removal efficiency is high.

It should be noted that the terms "first" and "second" are used for descriptive purposes only and are not to be construed as indicating or implying relative importance.

## Claims

1. A waste removal device for a 3D printer, wherein the waste removal device is arranged in the 3D printer, and the 3D printer is provided with a cavity enclosed by a housing, wherein the housing is provided with a channel extending from an inside of the cavity to an outside of the cavity;
the waste removal device is arranged in the cavity, and the waste removal device comprises a trigger member and a material receiving member, wherein
the trigger member is slidably connected to a body of the waste removal device;
the material receiving member is connected to the trigger member in a linked manner, and when the trigger member is not triggered, the material receiving member is arranged at and covers an opening of the channel facing the inside of the cavity.

2. The waste removal device according to claim 1, wherein a surface area of the material receiving member is equal to or greater than a surface area of the opening.

3. The waste removal device according to claim 1, further comprising an elastic member, wherein one side of the elastic member is connected to the trigger member or the material receiving member, and the other side of the elastic member is fixedly arranged.

4. The waste removal device according to claim 1, further comprising a magnetic member, wherein the trigger member comprises metal;
the magnetic member is arranged on a printing head of the 3D printer or the housing of the 3D printer.

5. The waste removal device according to any one of claims 1 to 4, further comprising a stroke amplification mechanism, wherein the trigger member is connected to the material receiving member via the stroke amplification mechanism.

6. The waste removal device according to claim 5, further comprising an elastic member, wherein one side of the elastic member is connected to the stroke amplification mechanism, and the other side of the elastic member is fixedly arranged.

7. The waste removal device according to claim 5, wherein the stroke amplification mechanism comprises a transmission rod; a first end of the transmission rod is rotatably connected to the body of the waste removal device, a second end of the transmission rod is connected to the material receiving member, and the trigger member is connected between the first end and the second end of the transmission rod.

8. The waste removal device according to claim 5, wherein the stroke amplification mechanism comprises two gears with different diameters, the trigger member is connected to a small-diameter gear, and the material receiving member is connected to a large-diameter gear.

9. The waste removal device according to any one of claims 1 to 8, further comprising a first wiping member and a mounting base, wherein
the mounting base is fixedly arranged on the body of the waste removal device, and
the first wiping member is arranged on a side of the mounting base facing the printing head.

10. The waste removal device according to claim 9, wherein the first wiping member comprises a metal cylinder, and a diameter of the first wiping member is greater than or equal to 1 mm and less than 4 mm.

11. The waste removal device according to any one of claims 1 to 8, further comprising:
a second wiping member rotatably connected to the body of the waste removal device, wherein a surface of the second wiping member is provided with a plurality of protrusions.

12. The waste removal device according to claim 11, wherein the second wiping member comprises a silicone wiping member.

13. The waste removal device according to claim 9, further comprising a silicone wiping member fixedly arranged on the body of the waste removal device, wherein
the first wiping member, the silicone wiping member, and the opening are located on a same side of the body of the waste removal device, and the first wiping member is located between the silicone wiping member and the opening.

14. The waste removal device according to claim 1, wherein a surface area of the opening is greater than a cross-sectional area of a waste material generated by the 3D printer.

15. The waste removal device according to claim 1, further comprising an upper cover provided with a blocking portion in a movement direction of the material receiving member to expose the opening, wherein a plane on which the material receiving member is located is lower than a lowest point of the blocking portion.

16. The waste removal device according to claim 1, wherein the 3D printer is provided with a nozzle, and a body of the material receiving member is provided with a groove corresponding to the nozzle.

17. A waste removal device for a 3D printer, comprising a trigger member, a material pushing member, and a material receiving member, wherein
the trigger member is slidably or rotatably connected to a body of the waste removal device;
the trigger member is connected to the material pushing member in a linked manner;
the material receiving member is fixedly arranged on the body of the waste removal device, and the material pushing member is located on a side of the material receiving member facing a printing head.

18. The waste removal device according to claim 17, wherein the material pushing member and the material receiving member are plate-shaped, and a plane on which the material pushing member is located and a plane on which the material receiving member is located form an included angle greater than 0° and less than 180°.

19. The waste removal device according to claim 18, wherein a distance between a side of the material pushing member close to the material receiving member and the material receiving member is greater than 0.5 mm but less than 1 cm, and a side of the material pushing member away from the material receiving member is lower than a height of the printing head.

20. The waste removal device according to claim 17 or 18, further comprising an elastic member, wherein one side of the elastic member is connected to the trigger member or the material pushing member, and the other side of the elastic member is fixedly arranged.

21. The waste removal device according to claim 17 or 18, further comprising a magnetic member, wherein the trigger member comprises metal;
the magnetic member is arranged on the printing head of the 3D printer or a housing of the 3D printer.

22. The waste removal device according to claim 17 or 18, wherein the trigger member is rod-shaped, and the trigger member has a first end and a second end, wherein a first portion of the trigger member is rotatably connected to the body of the waste removal device, and the first portion is a portion of the trigger member located between the first end and the second end;
the first end of the trigger member is triggered by the 3D printer.

23. The waste removal device according to claim 22, wherein the second end of the trigger member is connected to the material pushing member, wherein
a distance between the first end and the first portion is a first length, a distance between the second end and the first portion is a second length, and the first length is less than the second length.

24. The waste removal device according to claim 23, further comprising a connecting member, wherein the connecting member connects the second end of the trigger member to the material pushing member; and
further comprising an elastic member, wherein one side of the elastic member is connected to the connecting member, and the other side of the elastic member is fixedly arranged.

25. The waste removal device according to claim 17, further comprising two gears with different diameters, wherein the trigger member is connected to a small-diameter gear, and the material receiving member is connected to a large-diameter gear.

26. The waste removal device according to claim 17, further comprising a second wiping member rotatably connected to the body of the waste removal device, wherein a surface of the second wiping member is provided with a plurality of protrusions.

27. The waste removal device according to claim 26, wherein the second wiping member further comprises a silicone wiping member.

28. The waste removal device according to claim 17, wherein the printing head is provided with a nozzle, and a body of the material receiving member is provided with a groove corresponding to the nozzle.

29. A 3D printer, comprising a sealed cavity enclosed by a housing, and the waste removal device according to any one of claims 1 to 16;
or comprising a printing head and the waste removal device according to any one of claims 17 to 28.
